# EUROPEAN PATENT SPECIFICATION

(11) **EP 2 116 910 B1**
(45) Date of publication and mention of the grant of the patent: **30.09.2020**
(21) Application number: 09159500.9
(22) Date of filing: 06.05.2009
(51) Int. Cl.: G03G 21/02

(54) **Printing system, information processing apparatus, image forming apparatus, information processing method, and processing method**
Drucksystem, Informationsverarbeitungsvorrichtung, Bilderzeugungsvorrichtung, Informationsverarbeitungsverfahren und Verarbeitungsverfahren
Système d'impression, appareil de traitement d'informations, appareil de formation d'images, procédé de traitement d'informations et procédé de traitement

(30) Priority: 07.05.2008 JP 2008121649
(43) Date of publication of application: 11.11.2009
(73) Proprietor: Canon Kabushiki Kaisha, Tokyo 146-8501 (JP)
(72) Inventor: Horiyama, Jun, Tokyo 146-8501 (JP)
(74) Representative: TBK

(56) References cited:
- JP-A- 2002 055 576
- US-A1- 2007 280 759

## Description

### BACKGROUND OF THE INVENTION

### Field of the Invention

The present invention relates to a printing system, information processing apparatus, image forming apparatus, information processing method, and processing method.

### Description of the Related Art

There have conventionally been known a variety of systems in which a plurality of apparatuses operate in cooperation with each other. An example of such systems is one which provides a copy function by connecting a scanner apparatus for scanning an image and an image forming apparatus for printing an image.

Some image forming apparatuses have a counter function for counting the number of delivered sheets or the like, and a charging function for calculating the charge (processing charge) of processing.

There has been proposed a method of, in a system which executes processing using two apparatuses in cooperation with each other, determining whether the partner apparatus has the charging function when determining an apparatus for charging in order to manage the use status (the number of sheets used and the charge of use) of a user (see Japanese Patent Laid-Open No. 2002-033868). This method can avoid double charging.

Recently in the fields of commercial printing and the like, after a given printing apparatus performs print processing, another apparatus executes coating processing to coat the printout with a glossy toner called a clear toner. A printing system which finishes a printed material at higher quality according to this technique is becoming popular. In this system, the user can select conventional normal printing or high-quality printing when printing an image. A method of performing high-quality printing via these two paths (using two apparatuses in cooperation with each other) will be called 2-path printing. In contrast, a method of achieving high-quality printing via one path (using only one apparatus) will be called 1-path printing. In high-quality printing by 1-path printing, a sheet having undergone print processing undergoes clear toner coating processing without delivering the sheet. An example of 2-path printing is form printing. In this case, a printed material the user wants can be created by performing normal printing in the first path and compositing form data registered in advance in an apparatus for the second path.

However, in 2-path printing in which different apparatuses provide normal printing and high-quality printing, a method different from the management method proposed in Japanese Patent Laid-Open No. 2002-033868 is required to manage the use status of a user.

For example, when the charging function of either apparatus operates, as disclosed in Japanese Patent Laid-Open No. 2002-033868, no accurate processing charge can be calculated in high-quality printing.

More specifically, the processing charge of high-quality printing is the sum of a charging result in an image forming apparatus which performs normal printing and a charging result in an image forming apparatus which applies a clear toner. If only the charging function of one image forming apparatus operates in 2-path printing, no accurate processing charge can be calculated. The user may select high-quality printing but perform only normal printing without actually executing high-quality printing, and vice versa. When either apparatus charges a user for all processes, the accuracy of the processing charge is poor.

To solve this, the charging functions of all apparatuses may operate. In this case, the processing charges of toner and the like can be accurately calculated. However, the processed-sheet count value may not be accurate. More specifically, when each apparatus acquires a count value on the basis of the delivered-sheet count in 2-path printing, processed sheets are counted up though the same sheets as those in the first path are printed.

If sheets are counted double, no accurate processed-sheet count can be calculated. Further, the use of high-quality printing is limited. Assume that the system manages the upper limit of the sheet count of use for each user. If the processed-sheet count of a user reaches the upper limit upon printing by a first-path image forming apparatus for executing normal printing, processing to inhibit printing over the upper limit is executed for print processing of applying a clear toner in the second path, and the print processing may end. However, the user does not use new sheets in the second path, so the inhibition of printing in the second path is not a normal operation.

From this, demand has arisen for appropriately managing the prices of toner and the like, and the processing charge based on the sheet count and the like, and flexibly avoiding a situation in which the use of an image forming apparatus by a user is improperly limited in a system in which a plurality of image forming apparatuses cooperate with each other.
The JP 2002 055576 A discloses an image forming device capable of surely and normally finishing a job even in the case the number of printed sheets exceeds the upper limit number of set sheets, without stopping a printing operation in the midst of the job when the number of printed sheets reaches the upper limit number. An inputted user ID is collated with a previously registered user ID by a CPU of an image input/output control part of the image forming device, and in the case the number of printed sheets corresponding to the user ID which is right as the collation result reaches at least the previously set upper limit number of printed sheets, the control of inhibiting the printing operation corresponding to the user ID which is right as the collation result is performed.

### SUMMARY OF THE INVENTION

The present invention has been made to overcome the conventional drawbacks.

The present invention in its first aspect provides a printing system as specified in claims 1 to 5.

The present invention in its second aspect provides an information processing method as specified in claim 6.

The present invention can apply flexible upper limit management even in 2-path printing when the user uses an image forming apparatus.

Further features of the present invention will become apparent from the following description of exemplary embodiments with reference to the attached drawings.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a view showing the overall configuration of an image forming system having an information processing apparatus according to the first embodiment of the present invention;
Fig. 2 is a block diagram showing the detailed arrangements of an information processing apparatus 101 and image forming apparatuses 102 and 103;
Fig. 3 is a block diagram showing details of the module configuration of a 2-path upper limit management program 213, and management information 214 in the information processing apparatus 101;
Fig. 4 is a table showing an example of user information 305;
Fig. 5 is a table showing an example of device information 306;
Fig. 6 is a table showing an example of processing charge information 308;
Fig. 7 is a table showing an example of print log information 307;
Fig. 8 is a table showing an example of cumulative sheet count & cumulative money amount information 309;
Figs. 9A to 9C are flowcharts showing the sequence of processing in a 2-path upper limit management unit 310 of the information processing apparatus 101 and those of corresponding processes in the image forming apparatuses 102 and 103;
Fig. 10 is a view showing an example of a UI window displayed on an operation unit 228 of the image forming apparatus 102;
Fig. 11 is a view showing an example of a UI window displayed on the operation unit 228 of the image forming apparatus 102;
Fig. 12 is a view showing an example of a UI window displayed on the operation unit 228 of the image forming apparatus 102;
Fig. 13 is a view showing an example of a UI window displayed on an operation unit 228 of the image forming apparatus 103;
Fig. 14 is a table showing an example of the print log information 307 after processing in the embodiment; and
Fig. 15 is a table showing an example of the cumulative sheet count & cumulative money amount information 309 after processing in the embodiment.

### DESCRIPTION OF THE EMBODIMENTS

Exemplary embodiments of the present invention will now be described in detail in accordance with the accompanying drawings.

### [First Embodiment]

### <1. Configuration of Image Forming System>

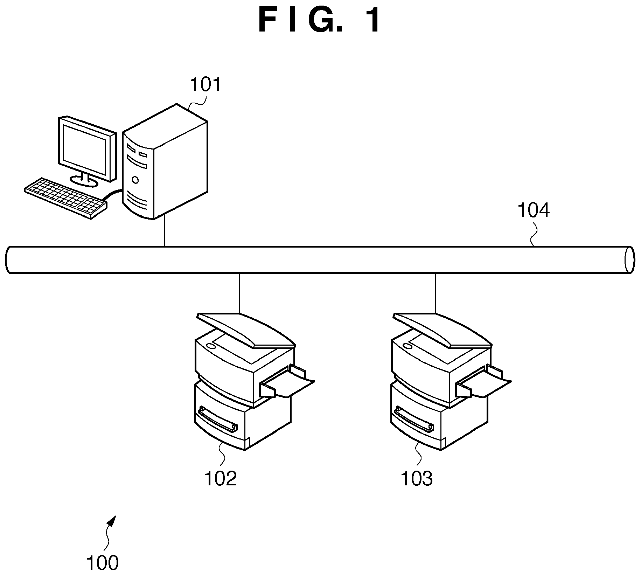

Fig. 1 is a view showing the overall configuration of an image forming system having an information processing apparatus according to the first embodiment of the present invention. In Fig. 1, reference numeral 101 denotes an information processing apparatus. An image forming apparatus (first image forming apparatus) 102 has a scanner function, printer function, multifunctional peripheral function, and the like. An image forming apparatus (second image forming apparatus) 103 has a function of applying a clear toner, and can implement 2-path printing in cooperation with the image forming apparatus 102. The information processing apparatus 101 and the image forming apparatuses 102 and 103 are connected to each other via a network 104 such as a LAN. The embodiment assumes that the image forming apparatus 102 performs first-path print processing (first processing) in 2-path printing and the image forming apparatus 103 performs second-path print processing (second processing).

The information processing apparatus 101 stores a 2-path upper limit management program (details of which will be described later) so as to be able to execute the program. The information processing apparatus 101 manages actual performance information based on pieces of log information of respective jobs that are collected from the image forming apparatuses 102 and 103. The information processing apparatus 101 also stores and manages the printable upper limit value of use in order to perform upper limit management based on the actual performance information.

### <2. Arrangements of Information Processing Apparatus and Image Forming Apparatus>

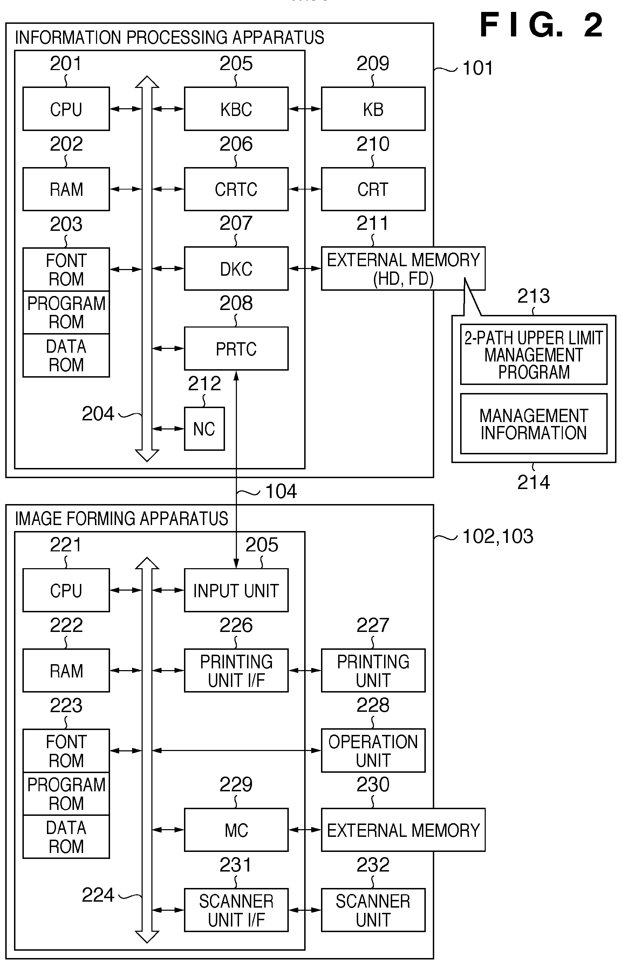

Fig. 2 is a block diagram showing the detailed arrangements of the information processing apparatus 101 and the image forming apparatuses 102 and 103.

The arrangement of the information processing apparatus 101 will be explained first. In Fig. 1, a CPU 201 executes programs such as an OS and application (e.g., a 2-path upper limit management program) which are stored in the program ROM of a ROM 203 or loaded from an external memory 211 to a RAM 202.

The OS stands for an operating system which runs on a computer. The operating system will be called an OS. By executing the 2-path upper limit management program, 2-path upper limit management processing shown in a flowchart to be described later is achieved.

The RAM 202 functions as a main memory, work area, and the like for the CPU 201. A keyboard controller (KBC) 205 controls key inputs from a keyboard (KB) 209 and a pointing device (not shown).

A CRT controller (CRTC) 206 controls display on a CRT 210. A disk controller (DKC) 207 controls data access in the external memory 211 such as a hard disk (HD) or floppy® disk (FD) which stores various programs and various kinds of information.

The external memory 211 is a hard disk (HD) or floppy® disk (FD) which stores various programs and various kinds of information. The external memory 211 stores a 2-path upper limit management program 213, and management information 214 processed in accordance with this program. The 2-path upper limit management program 213 and management information 214 will be described later.

A PRTC 208 controls exchange of signals with the connected image forming apparatuses 102 and 103. An NC 212 is connected to a network and executes communication control processing with another device connected to the network.

The arrangement of the image forming apparatus 102 or 103 will be explained. In the image forming apparatus 102 or 103, as shown in Fig. 2, a CPU 221 in the image forming apparatus 102 or 103 controls blocks connected to a system bus 224 on the basis of control programs stored in a ROM 223 and external memory 230.

An image signal generated by processing of the CPU 201 is output as output information to a printing unit (image forming apparatus engine) 227 via a printing unit I/F 226. The CPU 221 can communicate with the information processing apparatus 101 via an input unit 225. By the communication processing, the CPU 221 can notify the information processing apparatus 101 of various kinds of information in the image forming apparatus 102 or 103.

A program ROM in a ROM 223 stores control programs and the like for the CPU 221. A font ROM in the ROM 223 stores font data and the like used to generate output information. For an image forming apparatus not equipped with the external memory 230 such as a hard disk, a data ROM in the ROM 223 stores various kinds of information used in the information processing apparatus 101.

A RAM 222 functions as a main memory, work area, and the like for the CPU 221. The RAM 222 can increase its memory capacity by an optional RAM connected to an expansion port (not shown). The RAM 222 is used as an output information rasterization area, environment data storage area, NVRAM, and the like.

A memory controller (MC) 229 controls access to the external memory 230. The external memory 230 is connected as an option, and stores font data, an emulation program, form data, and the like.

An operation unit 228 has switches, an LED display (display), and the like for operation. The operation unit 228 displays UI (User Interface) windows such as an operation window and notification window which provide information to the user.

The printing unit 227 executes monochrome printing and color printing on a print medium such as paper on the basis of an image signal received via the printing unit I/F 226. In the image forming apparatus 103, the printing unit 227 performs processing of coating the surface of a printed medium with a clear toner.

A scanner unit I/F 231 performs correction, processing, and editing for image data received from a scanner unit 232.

The scanner unit 232 converts image information into an electrical signal by guiding, to a CCD, reflected light obtained by exposing and scanning an image on a document. Further, the scanner unit 232 converts the electrical signal into R, G, and B luminance signals, and outputs the luminance signals as image data. When the user designates the start of reading via the operation unit 228, the scanner unit 232 receives a document reading instruction. Upon receiving the instruction, the scanner unit 232 reads a document.

As the document reading method, a document sheet set on a document feeder (not shown) may also be automatically fed. A document sheet may also be set on a glass surface (not shown) and scanned by moving the exposure unit.

### <3. Details of Module Configuration of 2-path Upper Limit Management Program and Management Information in Information Processing Apparatus>

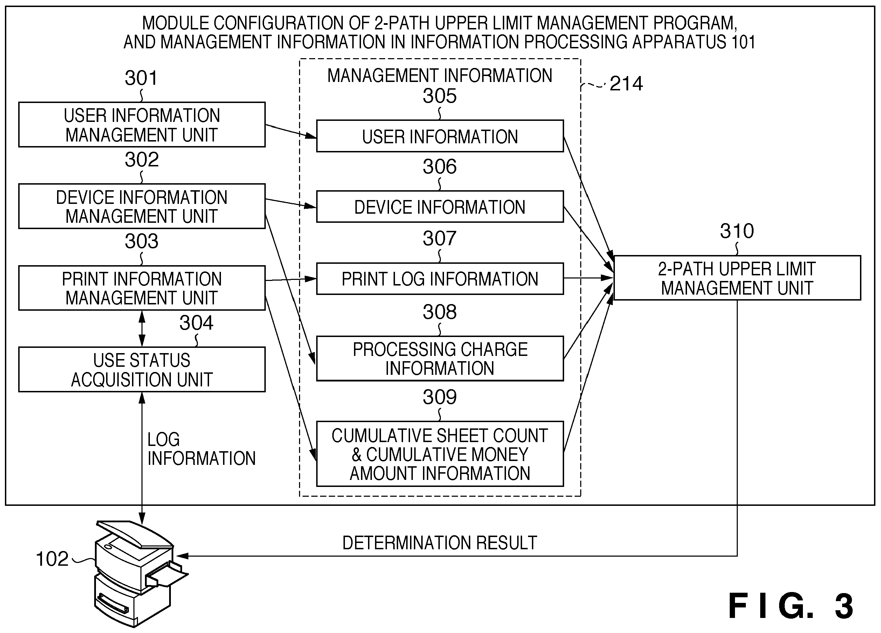

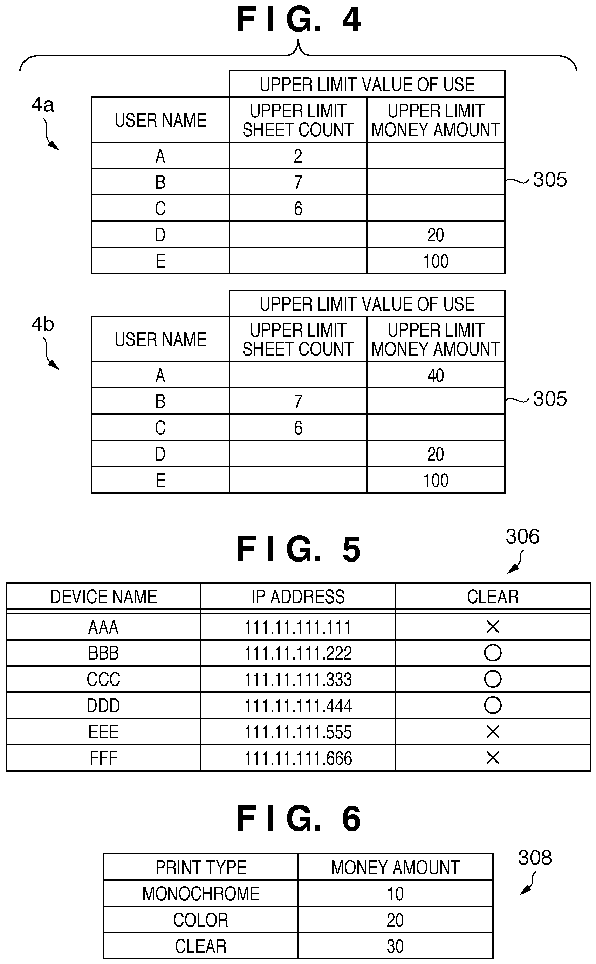

Fig. 3 is a block diagram showing details of the module configuration of the 2-path upper limit management program 213 and the management information 214 in the information processing apparatus 101. Figs. 4 to 8 are tables showing examples of the management information 214. The module configuration of the 2-path upper limit management program 213 will be explained with reference to Figs. 4 to 8.

### (1) User Information Management Unit

In Fig. 3, a user information management unit 301 manages user information (information capable of identifying a user) 305 set by the administrator. Fig. 4 is a table showing an example of the user information 305 set via the user information management unit 301.

As shown in Fig. 4, the user information 305 sets, for each user, the upper limit value of use when he uses an image forming system 100.

In an example 4a of Fig. 4, the upper limit of the number of sheets user "A" can use is "2". Similarly, the upper limit of the number of sheets user "B" can use is "7", and that of the number of sheets user "C" can use is "5".

The upper limit (upper limit charge) of the amount of money user "D" can use is "¥20", and that of the amount of money user "E" can use is "¥100".

The administrator can select, via the user information management unit 301, whether to manage the upper limit value of use by "sheet count" or "money amount". The user information 305 is set based on the selection result.

In an example 4b of Fig. 4, the management method of the upper limit value of use for user "A" changes from "sheet count" to "money amount". In this case, the upper limit of the number of sheets user "A" can use is canceled while the upper limit of the amount of money he can use is set to "¥40".

### (2) Device Information Management Unit

In Fig. 3, a device information management unit 302 manages device information 306 set by the administrator. The device information management unit 302 also manages processing charge information 308 containing information on the processing charge when an image forming apparatus managed by the device information 306 has executed processing.

Fig. 5 is a table showing an example of the device information 306. As shown in Fig. 5, the device information 306 holds the device name of each image forming apparatus managed by the information processing apparatus 101 in correspondence with an IP address (location). Further, the device information 306 holds information representing whether each image forming apparatus can perform processing of applying a clear toner.

In the example of Fig. 5, the device information 306 represents that the IP address of device name "AAA" is "111.11.111.111", and device "AAA" does not cope with clear toner coating processing.

Similarly, the device information 306 represents that the IP address of device name "BBB" is "111.11.111.222", and device "BBB" copes with clear toner coating processing. Further, the device information 306 represents that the IP address of device name "CCC" is "111.11.111.333", and device "CCC" copes with clear toner coating processing.

Fig. 6 is a table showing an example of the processing charge information 308. As shown in Fig. 6, the processing charge information 308 sets the processing charge for each print type (processing contents). In the example of Fig. 6, the processing charge information 308 represents that "monochrome" printing of one sheet costs "¥10". Similarly, the processing charge information 308 represents that "color" printing costs "¥20", and "clear" printing costs "¥30".

Note that the processing charge is set uniformly throughout the image forming system in the example of Fig. 6, but may also be set individually for each image forming apparatus.

### (3) Print Information Management Unit and Use Status Acquisition Unit

When the user sets print information and issues a print request in the image forming apparatus 102, a print information management unit and use status acquisition unit start processes to execute print processing in the image forming apparatus 102 and manage it in the information processing apparatus 101.

The print information includes the print sheet count, page count, print size, the type of paper for use, information (user information) on a user who has issued a print request, and information (color information) on color printing.

In Fig. 3, a print information management unit 303 collects log information from the image forming apparatus 102 via a use status acquisition unit 304, and manages it as print log information 307. Based on the collected log information, the print information management unit 303 calculates the cumulative number of sheets used and the cumulative amount of money used, and manages the actual performance as cumulative sheet count & cumulative money amount information 309.

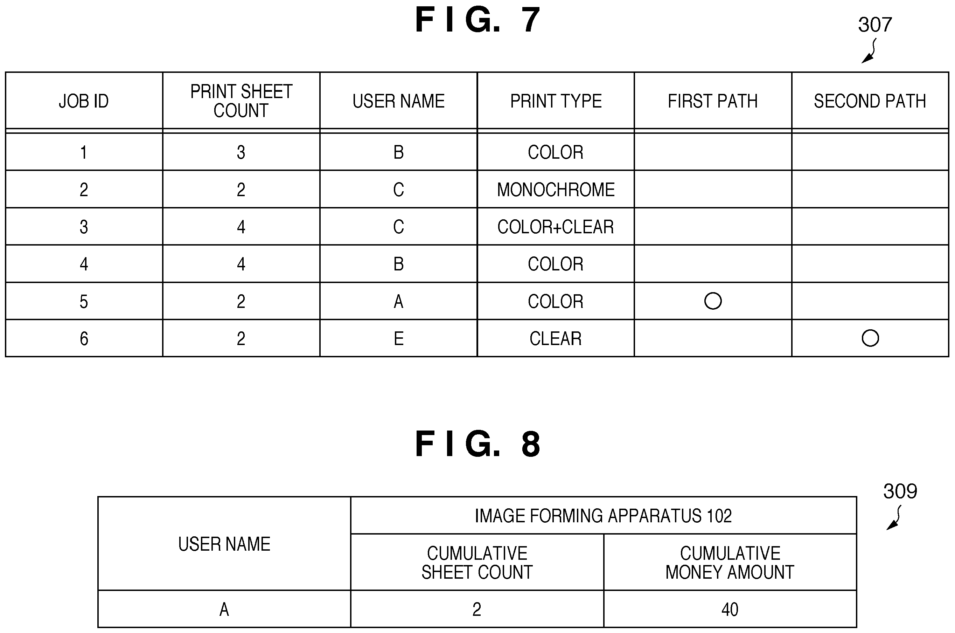

Fig. 7 is a table showing an example of the print log information 307. As shown in Fig. 7, the print log information 307 manages print log information in correspondence with a "job ID" serving as identification information for each job. The log information also includes "print sheet count" representing the number of printed sheets, "user name" which is user identification information and represents the name, and "print type" representing the type of printing such as color printing or monochrome printing.

The print log information 307 further includes "first path" setting representing whether the current job is a first-path job when performing 2-path processing, and "second path" setting representing whether the current job is a second-path print job when performing 2-path processing.

In the example of Fig. 7, the print log information 307 represents that for a job of job ID "1", the print sheet count is "3", the user who has issued a print request is "B", and the print type is "color printing". The absence of information on "first path" and "second path" means that the job of job ID "1" is not "2-path printing" but normal printing.

Similarly, the print log information 307 represents that for a print job of job ID "3", user "C" has executed color + clear printing by one apparatus (1-path printing). The print log information 307 represents that for a print job of job ID "5", the print sheet count is "2", the user who has issued a print request is "A", and the print type is "color printing". "○" in "first path" means that the job of job ID "5" is a first-path job in "2-path printing". The print log information 307 represents that a job of job ID "6" is requested by user "E" and the print type is "clear printing". Also, "○" in "second path" means that the job of job ID "6" is a second-path job in "2-path printing".

Fig. 8 is a table showing an example of the cumulative sheet count & cumulative money amount information 309. The cumulative sheet count & cumulative money amount information 309 represents the cumulative sheet count and cumulative money amount of user "A" upon completion of a job (first-path processing) in the image forming apparatus 102.

As shown in Fig. 7, the job of job ID "5", printing of which has been requested by user "A", is complete at this time. The cumulative sheet count and cumulative money amount for user "A" are calculated based on the print log information 307 and device information 306.

More specifically, since the print sheet count is "2" and the print type is "color", a cumulative sheet count of 2 and a cumulative money amount of ¥40 (2 sheets × ¥20) are calculated.

### (4) 2-path Upper Limit Management Unit

In Fig. 3, a 2-path upper limit management unit 310 identifies, based on the print log information 307, the latest job which is complete in the image forming apparatus 102.

By referring to a user name corresponding to the identified job, the 2-path upper limit management unit 310 identifies a user who has requested printing of the print job. The 2-path upper limit management unit 310 compares the user information 305 and cumulative sheet count & cumulative money amount information 309 of the identified user, and determines whether the cumulative sheet count or cumulative money amount has reached the upper limit value of use set in the user information 305. The 2-path upper limit management unit 310 determines whether the user can execute second-path processing, and notifies the image forming apparatus 102 of the determination result.

### <4. Processing Sequence in 2-path Upper Limit Management Unit>

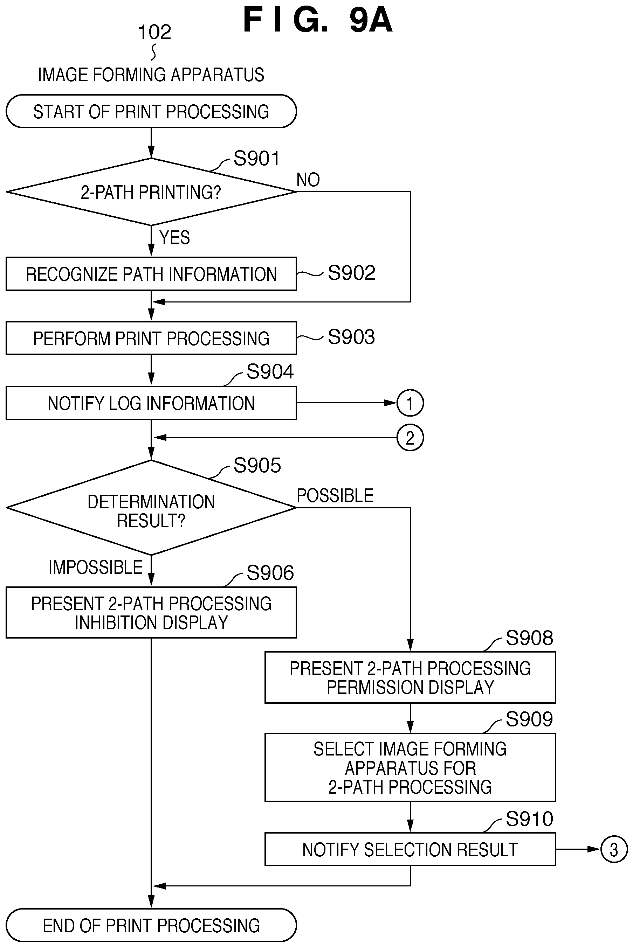

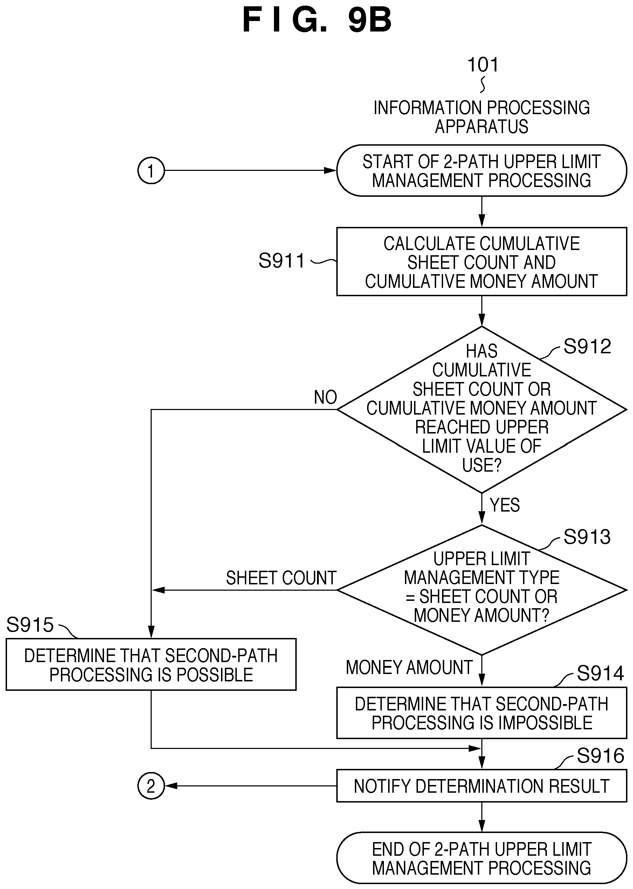

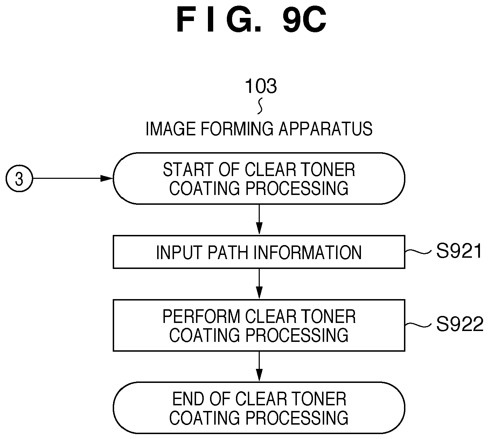

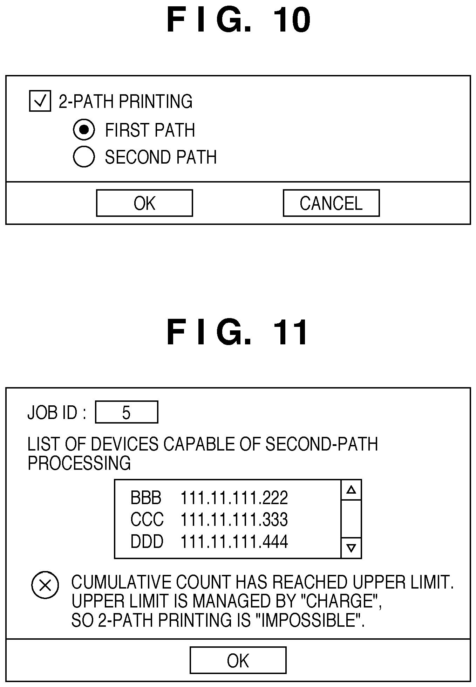

The sequence of 2-path upper limit management processing in the 2-path upper limit management unit 310 will be explained. Figs. 9A to 9C are flowcharts showing the sequence of processing in the 2-path upper limit management unit 310 of the information processing apparatus 101 and those of corresponding processes in the image forming apparatuses 102 and 103. The 2-path upper limit management processing will be described while referring to windows (Figs. 10 to 13) displayed on the operation unit 228 of the image forming apparatus 102 or 103.

When the user selects a job and sets print information via the operation unit 228 of the image forming apparatus 102, and then issues a print request, print processing starts.

In step S901, the operation unit 228 displays a UI window (Fig. 10) for setting whether the current job requires 2-path printing, and if the current job requires 2-path printing, setting whether the current job is a first- or second-path job.

The user makes predetermined settings in the UI window shown in Fig. 10. In the example of Fig. 10, the current job requires 2-path processing and is a first-path job.

If the user selects 2-path processing in step S901, the process advances to step S902 to recognize path information (information on whether the current path is the first or second path) set in the UI window shown in Fig. 10. Then, the process advances to step S903.

If the user does not select 2-path processing in step S901, the process directly advances to step S903.

In step S903, the image forming apparatus 102 executes print processing for the selected job on the basis of the set print information. During print processing, the general counting function and charging function operate sequentially. While referring to the user information 305 of the user who has issued the print request, the image forming apparatus 102 determines whether the cumulative sheet count or cumulative money amount has reached the upper limit value of use.

Although not shown in Figs. 9A to 9C, if the cumulative sheet count or cumulative money amount reaches the upper limit value of use during execution of print processing in the image forming apparatus 102, print processing stops and the user is notified of a message, as print inhibition processing. As another inhibition processing, the user is given a warning that the cumulative sheet count or cumulative money amount has reached the upper limit, and then continuation of printing is permitted.

If the image forming apparatus 102 completes print processing for the selected job in step S903, the process advances to step S904. In step S904, the image forming apparatus 102 transmits log information to the information processing apparatus 101.

After the image forming apparatus 102 transmits log information to the information processing apparatus 101 in step S904, the information processing apparatus 101 starts 2-path upper limit management processing.

In step S911, the information processing apparatus 101 stores the print log information 307 on the basis of the log information transmitted from the image forming apparatus 102. The information processing apparatus 101 calculates the cumulative sheet count & cumulative money amount information 309 on the basis of the stored print log information 307 and the device information 306.

In step S912, if the current job is a first-path job in 2-path processing, the information processing apparatus 101 compares the calculated cumulative sheet count & cumulative money amount information 309 with the upper limit value of use for the user in the user information 305.

If the information processing apparatus 101 determines as a result of the comparison in step S912 that the calculated cumulative sheet count & cumulative money amount information 309 has reached the upper limit value of use, the process advances to step S913. If the information processing apparatus 101 determines as a result of the comparison in step S912 that the calculated cumulative sheet count & cumulative money amount information 309 has not reached the upper limit value of use, the process advances to step S915.

In step S913, the information processing apparatus 101 determines whether the type of the upper limit value of use that has been used to determine that the calculated cumulative sheet count & cumulative money amount information 309 has reached the upper limit value of use is "upper limit sheet count" or "upper limit money amount". If the information processing apparatus 101 determines in step S913 that the type of the upper limit value of use is "upper limit money amount", the process advances to step S914 to determine that second-path processing is impossible. If the information processing apparatus 101 determines in step S913 that the type of the upper limit value of use is "upper limit sheet count", the process advances to step S915 to determine that second-path processing is possible.

Assume that the cumulative sheet count & cumulative money amount information 309 represents the cumulative sheet count = 2 and the cumulative money amount = ¥40, as shown in Fig. 8. Also assume that the user information 305 for user "A" represents the upper limit sheet count = 2, as shown in 4a of Fig. 4.

In this case, although the cumulative sheet count has reached the upper limit sheet count, the type of the upper limit value of use is "upper limit sheet count", and thus it is determined that second-path processing is possible.

To the contrary, assume that the user information 305 for user "A" represents the upper limit money amount = ¥40, as shown in 4b of Fig. 4. In this case, the cumulative money amount has reached the upper limit money amount, the type of the upper limit value of use is "upper limit money amount", and thus it is determined that second-path processing is impossible.

Even if the cumulative money amount of user "A" has not reached the upper limit money amount in step S912, it can also be determined based on print information whether the cumulative money amount will exceed the upper limit money amount upon clear printing in the second path. If it is predicted that the cumulative money amount will exceed the upper limit money amount for the user upon clear printing in the second path, the process advances to step S914.

In step S916, the information processing apparatus 101 notifies the image forming apparatus 102 of the determination result in step S914 or S915, and then ends the 2-path upper limit management processing.

Upon receiving the determination result from the information processing apparatus 101, the image forming apparatus 102 analyzes the contents of the notified determination result in step S905. If the image forming apparatus 102 determines as a result of the analysis in step S905 that second-path processing is impossible, the process advances to step S906 to display a message on the operation unit 228 to inhibit 2-path printing.

Fig. 11 is a view showing an example of the 2-path printing inhibition display appearing on the operation unit 228. Since the cumulative money amount has reached the upper limit money amount, the user is notified of, as the 2-path processing inhibition display, a message that the 2-path processing cannot proceed to second-path processing, as shown in Fig. 11.

If the image forming apparatus 102 determines as a result of the analysis in step S905 that second-path processing is possible, the process advances to step S908 to display a 2-path processing permission message on the operation unit 228.

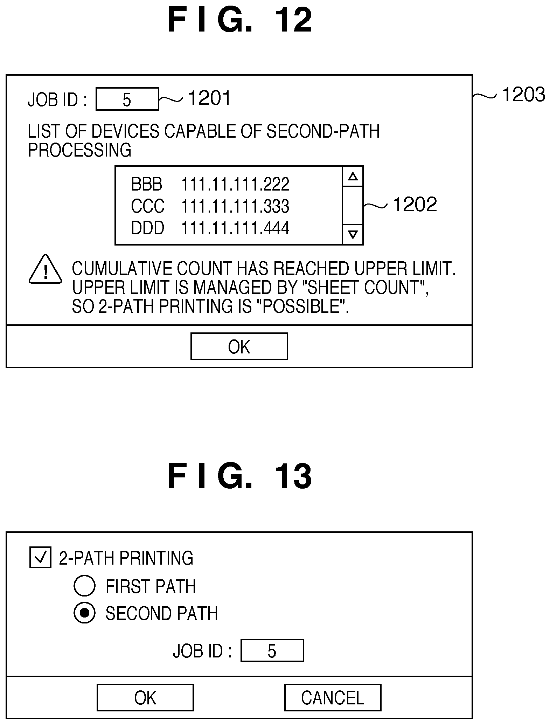

Fig. 12 is a view showing an example of the 2-path printing permission display appearing on the operation unit 228. As shown in Fig. 12, as the 2-path printing permission display, a field 1201 displays a job ID having undergone first-path print processing. A field 1202 displays a list of image forming apparatuses capable of second-path processing. The type of the upper limit value of use is "upper limit sheet count". Thus, although the cumulative sheet count has reached the upper limit value of use upon completion of first-path processing, the user is notified of a message that the 2-path printing can proceed to second-path processing.

If the user selects, in the display presented in step S908, an image forming apparatus for executing second-path processing, the image forming apparatus 102 accepts the selection result in step S909. In step S910, the image forming apparatus 102 notifies, of the selection result, an image forming apparatus (in this case, the image forming apparatus 103) selected as one for executing second-path processing. Upon completion of notifying the selection result in step S910, the image forming apparatus 102 ends the print processing.

Upon receiving the selection result notification, the image forming apparatus 103 starts clear toner print processing. In the image forming apparatus 103, the user feeds a printed material delivered from the image forming apparatus 102, selects a job in advance via the operation unit 228, and sets processing information.

If the image forming apparatus 103 receives the selection result notification from the image forming apparatus 102 in this state, the process advances to step S921. In step S921, the operation unit 228 displays a UI window (Fig. 13) for setting whether the current job requires 2-path printing, and if the current job requires 2-path printing, setting whether the current print job is a first- or second-path job.

The user makes predetermined settings in the UI window shown in Fig. 13. In the example of Fig. 13, the current job requires 2-path processing and is a second-path job. At the same time, it is also possible to accept input of a job ID notified from the image forming apparatus 102, and only when a correct job ID is accepted from the user, permit execution of the job.

In step S922, the image forming apparatus 103 executes clear toner print processing for the selected job on the basis of set processing information. During the processing, the general charging function operates sequentially. While referring to the user information 305 of the user who has issued the processing request, the image forming apparatus 103 determines whether the cumulative sheet count or cumulative money amount has reached the upper limit value of use.

Although not shown in Figs. 9A to 9C, if the cumulative sheet count or cumulative money amount reaches the upper limit value of use during execution of processing in the image forming apparatus 103, print processing stops and the user is notified of a message.

Upon completion of the clear toner print processing in step S922, the process ends.

### <5. Management Information After Processing>

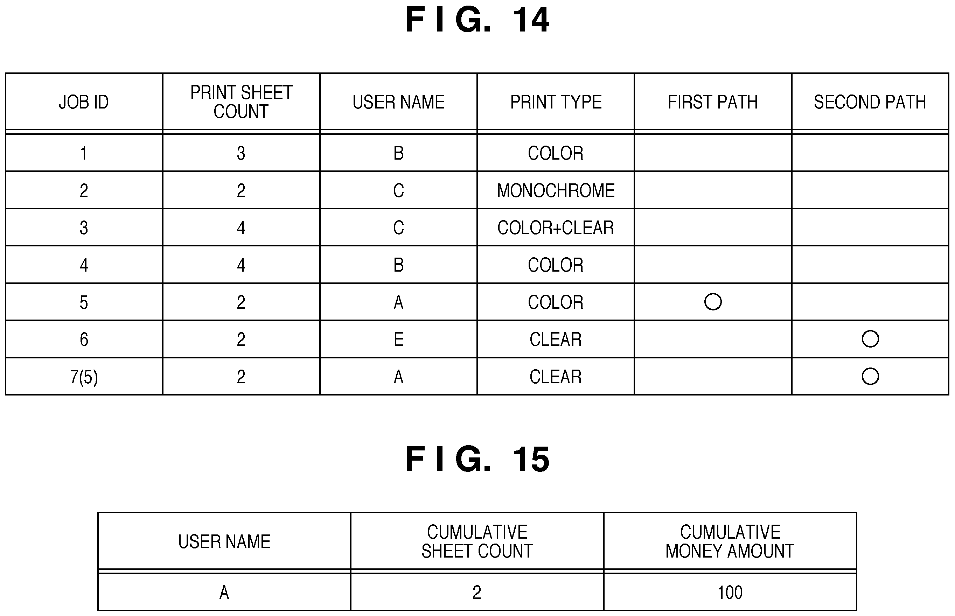

Figs. 14 and 15 show information after updating the print log information and the cumulative sheet count & cumulative money amount information in the information processing apparatus 101 after 2-path printing by user A.

In Fig. 14, job ID "7" is added. This represents the print log of the second path, and (5) in the job ID column is the job ID of a corresponding first path.

In Fig. 15, no cumulative sheet count changes in cumulative sheet count & cumulative money amount information after second-path processing by user A. As for the cumulative money amount, the charge of two sheets by clear printing is added.

As is apparent from the above description, according to the embodiment, upon completion of first-path processing in the 2-path printing system, it is determined whether to advance to second-path processing. In particular, the processing switches depending on which of the sheet count and money amount is used to manage the upper limit for a user.

As a result, it can be appropriately determined whether 2-path printing can proceed to second-path processing.

### [Other Embodiments]

The present invention may be applied to a system including a plurality of devices (e.g., a host computer, interface device, reader, and printer) or an apparatus (e.g., a copying machine or facsimile apparatus) formed by a single device.

The object of the present invention is also achieved by supplying a computer-readable storage medium which stores software program codes for implementing the functions of the above-described embodiment to a system or apparatus. In this case, these functions are implemented by reading out and executing the program codes stored in the storage medium by the computer (or the CPU or MPU) of the system or apparatus. In this case, the storage medium which stores the program codes constitutes the present invention.

The storage medium for supplying the program codes includes a floppy® disk, hard disk, optical disk, magnetooptical disk, CD-ROM, CD-R, magnetic tape, nonvolatile memory card, and ROM.

The present invention is not limited to a case wherein the functions of the above-described embodiment are implemented when the computer executes the readout program codes. Also, the present invention includes a case wherein an OS (Operating System) or the like running on the computer performs some or all of actual processes on the basis of the instructions of the program codes and thereby implements the functions of the above-described embodiment.

Furthermore, the present invention includes a case wherein the functions of the above-described embodiment are implemented after the program codes read out from the storage medium are written in the memory of a function expansion board inserted into the computer or the memory of a function expansion unit connected to the computer. That is, the present invention also includes a case wherein after the program codes are written in the memory, the CPU of the function expansion board or function expansion unit performs some or all of actual processes on the basis of the instructions of the program codes and thereby implements the functions of the above-described embodiment.

This invention provides a flexible method capable of appropriately determining whether 2-path printing can proceed especially to second-path processing, in order to apply a conventional upper limit management mechanism to a 2-path printing system. According to this invention, when executing 2-path printing, the printing system performs upper limit management based on the sheet count of use for a user. When executing second-path print processing, even if the count of sheets used by the user in first-path print processing has reached an upper limit value, print processing is permitted in second-path print processing.

## Claims

1. A printing system capable of implementing 2-path printing using a plurality of image forming apparatuses (102, 103) in cooperation with each other, the system comprising:
actual performance management means (303) for managing, as actual performance for each user, a count of sheets used in print processing;
upper limit management means (301, 310) for storing an upper limit value of a printable sheet count for each user, and for performing print inhibition processing on the basis of a print request from a user for whom the actual performance of the sheet count managed by said actual performance management means exceeds the upper limit value;
first processing means for, in a first image forming apparatus (102), executing first-path print processing in 2-path printing and delivering a printed material; and
second processing means for, in a second image forming apparatus (103), executing second-path print processing in the 2-path printing for the printed material on which the first processing means has executed the first-path print processing,
wherein even if the actual performance of the sheet count managed by said actual performance management means (303) for the user who has designated the 2-path printing has reached the upper limit value in the second-path print processing in the 2-path printing, said upper limit management means (301, 310) is configured to not perform the print inhibition processing, and said second processing means is allowed to perform the second-path print processing.

2. The system according to claim 1, wherein in the 2-path printing, the second processing means is configured to subject a printed material obtained by either of color printing and monochrome printing in a first path, in a second path, to either of print processing of applying a clear toner and print processing of compositing form data registered in advance.

3. The system according to claim 1 or 2, wherein the upper limit management means is configured to, in the print inhibition processing, notify the user who has designated the 2-path printing that processing cannot be continued.

4. The system according to any one of claims 1 to 3, wherein
said actual performance management means is configured to manage, as actual performance for each user, a money amount charged for print processing,
said upper limit management means is configured to store a usable upper limit money amount for each user, and perform the print inhibition processing on the basis of a print request from a user for whom the actual performance of the money amount managed by said actual performance management means exceeds the upper limit money amount, and
the printing system further comprises setting means for setting which of the sheet count and the money amount is used to perform upper limit management for each user by said upper limit management means.

5. The system according to claim 4, wherein
when said setting means sets to perform upper limit management for each user on the basis of the sheet count, even if the actual performance of the sheet count managed by said actual performance management means for the user who has designated the 2-path printing has reached the upper limit value in the second-path print processing in the 2-path printing, said upper limit management means is configured to not perform the print inhibition processing, and said second processing means is allowed to perform the second-path print processing, and
when said setting means sets to perform upper limit management for each user on the basis of the money amount, if the actual performance of the money amount managed by said actual performance management means for the user who has designated the 2-path printing has reached the upper limit money amount in the second-path print processing in the 2-path printing, said upper limit management means is configured to perform the print inhibition processing.

6. An information processing method in a printing system capable of implementing 2-path printing using a plurality of image forming apparatuses (102, 103) in cooperation with each other, the method comprising:
an actual performance management step of managing, as actual performance for each user, a count of sheets used in print processing;
an upper limit management step of storing an upper limit value of a printable sheet count for each user, wherein print inhibition processing can be performed on the basis of a print request from a user for whom the actual performance of the sheet count managed in the actual performance management step exceeds the upper limit value;
a first processing step of, in a first image forming apparatus (102), executing first-path print processing in 2-path printing and delivering a printed material; and
a second processing step of in a second image forming apparatus (103), executing second-path print processing in the 2-path printing for the printed material on which in the first processing step the first-path print processing has been executed,
wherein even if the actual performance of the sheet count managed in the actual performance management step for the user who has designated the 2-path printing has reached the upper limit value in the second-path print processing in the 2-path printing, the print inhibition processing is not performed in the upper limit management step, and the second-path print processing is performed in the second processing step.

## Patentansprüche

1. Drucksystem, das einen Zwei-Wege-Druck unter Verwendung einer Vielzahl von Bilderzeugungsvorrichtungen (102, 103) implementieren kann, die miteinander kooperieren, mit
einer Tatsächliche-Leistung-Verwaltungseinrichtung (303) zur Verwaltung einer Anzahl von Blättern, die bei einer Druckverarbeitung verwendet werden, als tatsächliche Leistung für jeden Benutzer,
einer Obergrenzenverwaltungseinrichtung (301, 310) zur Speicherung eines oberen Grenzwerts einer druckbaren Blattanzahl für jeden Benutzer und zur Durchführung einer Druckverhinderungsverarbeitung auf der Grundlage einer Druckanfrage von einem Benutzer, für den die durch die Tatsächliche-Leistung-Verwaltungseinrichtung verwaltete tatsächliche Leistung der Blattanzahl den oberen Grenzwert überschreitet,
einer ersten Verarbeitungseinrichtung zur Ausführung einer Erster-Weg-Druckverarbeitung bei einem Zwei-Wege-Druck und zur Übermittlung eines gedruckten Materials in einer ersten Bilderzeugungsvorrichtung (102), und
einer zweiten Verarbeitungseinrichtung zur Ausführung einer Zweiter-Weg-Druckverarbeitung in einer zweiten Bilderzeugungsvorrichtung (103) bei dem Zwei-Wege-Druck für das gedruckte Material, bei dem die erste Verarbeitungseinrichtung die Erster-Weg-Druckverarbeitung ausgeführt hat,
wobei selbst dann, wenn die durch die Tatsächliche-Leistung-Verwaltungseinrichtung (303) verwaltete tatsächliche Leistung der Blattanzahl für den Benutzer, der den Zwei-Wege-Druck festgelegt hat, den oberen Grenzwert bei der Zweiter-Weg-Druckverarbeitung bei dem Zwei-Wege-Druck erreicht hat, die Obergrenzenverwaltungseinrichtung (301, 310) dazu eingerichtet ist, die Druckverhinderungsverarbeitung nicht durchzuführen, und der zweiten Verarbeitungseinrichtung die Durchführung der Zweiter-Weg-Druckverarbeitung erlaubt wird.

2. System nach Anspruch 1, wobei die zweite Verarbeitungseinrichtung bei dem Zwei-Wege-Druck dazu eingerichtet ist, ein gedrucktes Material, das entweder durch Farbdruck oder Monochromdruck bei einem ersten Weg erhalten wird, in einem zweiten Weg entweder einer Druckverarbeitung eines Beaufschlagens mit klarem Toner oder einer Druckverarbeitung eines Zusammensetzens von zuvor registrierten Formulardaten zu unterziehen.

3. System nach Anspruch 1 oder 2, wobei die Obergrenzenverwaltungseinrichtung dazu eingerichtet ist, bei der Druckverhinderungsverarbeitung dem Benutzer, der den Zwei-Wege-Druck festgelegt hat, mitzuteilen, dass die Verarbeitung nicht fortgesetzt werden kann.

4. System nach einem der Ansprüche 1 bis 3, wobei
die Tatsächliche-Leistung-Verwaltungseinrichtung zur Verwaltung eines für die Druckverarbeitung berechneten Geldbetrags als tatsächliche Leistung für diesen Benutzer eingerichtet ist,
die Obergrenzenverwaltungseinrichtung zur Speicherung eines verwendbaren Obergrenzengeldbetrags für jeden Benutzer und Durchführung der Druckverhinderungsverarbeitung auf der Grundlage einer Druckanfrage von einem Benutzer eingerichtet ist, für den die durch die Tatsächliche-Leistung-Verwaltungseinrichtung verwaltete tatsächliche Leistung des Geldbetrags den Obergrenzengeldbetrag überschreitet, und
das Drucksystem ferner eine Einstelleinrichtung zur Einstellung umfasst, ob die Blattanzahl oder der Geldbetrag zur Durchführung der Obergrenzenverwaltung für jeden Benutzer durch die Obergrenzenverwaltungseinrichtung verwendet wird.

5. System nach Anspruch 4, wobei,
wenn die Einstelleinrichtung einstellt, dass die Obergrenzenverwaltung für jeden Benutzer auf der Grundlage der Blattanzahl durchgeführt wird, die Obergrenzenverwaltungseinrichtung selbst dann, wenn die durch die Tatsächliche-Leistung-Verwaltungseinrichtung verwaltete tatsächliche Leistung der Blattanzahl für den Benutzer, der den Zwei-Wege-Druck festgelegt hat, den oberen Grenzwert bei der Zweiter-Weg-Druckverarbeitung bei dem Zwei-Wege-Druck erreicht hat, dazu eingerichtet ist, die Druckverhinderungsverarbeitung nicht durchzuführen, und der zweiten Verarbeitungseinrichtung die Durchführung der Zweiter-Weg-Druckverarbeitung erlaubt wird, und
wenn die Einstelleinrichtung die Durchführung der Obergrenzenverwaltung für jeden Benutzer auf der Grundlage des Geldbetrags einstellt, die Obergrenzenverwaltungseinrichtung dann, wenn die durch die Tatsächliche-Leistung-Verwaltungseinrichtung verwaltete tatsächliche Leistung des Geldbetrags für den Benutzer, der den Zwei-Wege-Druck festgelegt hat, den Obergrenzengeldbetrag bei der Zweiter-Weg-Druckverarbeitung bei dem Zwei-Wege-Druck erreicht hat, zur Durchführung der Druckverhinderungsverarbeitung eingerichtet ist.

6. Informationsverarbeitungsverfahren in einem Drucksystem, das einen Zwei-Wege-Druck unter Verwendung einer Vielzahl von Bilderzeugungsvorrichtungen (102, 103) implementieren kann, die miteinander kooperieren, mit
einem Tatsächliche-Leistung-Verwaltungsschritt eines Verwaltens einer Anzahl von bei einer Druckverarbeitung verwendeten Blättern als tatsächliche Leistung für jeden Benutzer,
einem Obergrenzenverwaltungsschritt eines Speicherns eines oberen Grenzwerts einer druckbaren Blattanzahl für jeden Benutzer, wobei eine Druckverhinderungsverarbeitung auf der Grundlage einer Druckanfrage von einem Benutzer durchgeführt werden kann, für den die in dem Tatsächliche-Leistung-Verwaltungsschritt verwaltete tatsächliche Leistung der Blattanzahl den oberen Grenzwert überschreitet,
einem ersten Verarbeitungsschritt eines Ausführens einer Erster-Weg-Druckverarbeitung bei einem Zwei-Wege-Druck und eines Übermittelns eines gedruckten Materials in einer ersten Bilderzeugungsvorrichtung (102), und
einem zweiten Verarbeitungsschritt eines Ausführens einer Zweiter-Weg-Druckverarbeitung in einer zweiten Bilderzeugungsvorrichtung (103) bei dem Zwei-Wege-Druck für das gedruckte Material, bei dem in dem ersten Verarbeitungsschritt die Erster-Weg-Druckverarbeitung ausgeführt wurde,
wobei selbst dann, wenn die in dem Tatsächliche-Leistung-Verwaltungsschritt (303) verwaltete tatsächliche Leistung der Blattanzahl für den Benutzer, der den Zwei-Wege-Druck festgelegt hat, bei der Zweiter-Weg-Druckverarbeitung bei dem Zwei-Wege-Druck den oberen Grenzwert erreicht hat, die Druckverhinderungsverarbeitung in dem Obergrenzenverwaltungsschritt nicht durchgeführt wird, und die Zweiter-Weg-Druckverarbeitung in dem zweiten Verarbeitungsschritt durchgeführt wird.

## Revendications

1. Système d'impression apte à mettre en œuvre une impression en 2 passages au moyen d'une pluralité d'appareils de formation d'image (102, 103) en coopération les uns avec les autres, le système comprenant :
un moyen de gestion de performance courante (303) destiné à gérer, en tant que performance courante de chaque utilisateur, un compte de feuilles utilisées lors d'un traitement d'impression ;
un moyen de gestion de limite haute (301, 310) destiné à mémoriser une valeur de limite haute d'un compte de feuilles pouvant être imprimées pour chaque utilisateur, et à mettre en œuvre un traitement d'interruption d'impression sur la base d'une demande d'impression provenant d'un utilisateur dont la performance courante du compte de feuilles gérée par ledit moyen de gestion de performance courante dépasse la valeur de limite haute ;
un premier moyen de traitement destiné à, dans un premier appareil de formation d'image (102), exécuter un traitement d'impression de premier passage de l'impression en 2 passages et délivrer un matériau imprimé ; et
un second moyen de traitement destiné à, dans un second appareil de formation d'image (103), exécuter un traitement d'impression de second passage de l'impression en 2 passages du matériau imprimé sur lequel le premier moyen de traitement a exécuté le traitement d'impression de premier passage,
dans lequel, même si la performance courante du compte de feuilles gérée par ledit moyen de gestion de performance courante (303) pour l'utilisateur qui a désigné l'impression en 2 passages a atteint la valeur de limite haute lors du traitement d'impression de second passage de l'impression en 2 passages, ledit moyen de gestion de limite haute (301, 310) est configuré pour ne pas mettre en œuvre le traitement d'interruption d'impression, et ledit second moyen de traitement est autorisé à mettre en œuvre le traitement d'impression de second passage.

2. Système selon la revendication 1, dans lequel, lors de l'impression en 2 passages, le second moyen de traitement est configuré pour soumettre un matériau imprimé obtenu par l'une ou l'autre d'une impression couleur et d'une impression monochrome lors d'un premier passage, à l'un ou l'autre d'un traitement d'impression d'application d'un toner transparent et d'un traitement d'impression de données de formulaire de composition enregistrées à l'avance lors d'un second passage.

3. Système selon la revendication 1 ou 2, dans lequel le moyen de gestion de limite haute est configuré pour, lors du traitement d'interruption d'impression, informer l'utilisateur qui a désigné l'impression en 2 passages qu'un traitement ne peut pas être poursuivi.

4. Système selon l'une quelconque des revendications 1 à 3, dans lequel
ledit moyen de gestion de performance courante est configuré pour gérer, en tant que performance courante pour chaque utilisateur, une somme d'argent facturée pour un traitement d'impression,
ledit moyen de gestion de limite haute est configuré pour mémoriser une somme d'argent de limite haute pouvant être utilisée pour chaque utilisateur, et pour mettre en œuvre le traitement d'interruption d'impression sur la base d'une demande d'impression provenant d'un utilisateur dont la performance courante de la somme d'argent gérée par ledit moyen de gestion de performance courante dépasse la somme d'argent de limite haute, et
le système d'impression comprenant en outre un moyen de définition destiné à définir celui du compte de feuilles et de la somme d'argent qui est utilisé pour mettre en œuvre une gestion de limite haute pour chaque utilisateur par ledit moyen de gestion de limite haute.

5. Système selon la revendication 4, dans lequel
lorsque ledit moyen de définition définit de mettre en œuvre une gestion de limite haute pour chaque utilisateur sur la base du compte de feuilles, même si la performance courante du compte de feuilles gérée par ledit moyen de gestion de performance courante pour l'utilisateur qui a désigné l'impression en 2 passages a atteint la valeur de limite haute lors du traitement d'impression de second passage de l'impression en 2 passages, ledit moyen de gestion de limite haute est configuré pour ne pas mettre en œuvre le traitement d'interruption d'impression, et ledit second moyen de traitement est autorisé à mettre en œuvre le traitement d'impression de second passage, et
lorsque ledit moyen de définition définit de mettre en œuvre une gestion de limite haute pour chaque utilisateur sur la base de la somme d'argent, si la performance courante de la somme d'argent gérée par ledit moyen de gestion de performance courante de l'utilisateur qui a désigné l'impression en 2 passages a atteint la somme d'argent de limite haute lors du traitement d'impression de second passage de l'impression en 2 passages, ledit moyen de gestion de limite haute est configuré pour mettre en œuvre le traitement d'interruption d'impression.

6. Procédé de traitement d'informations dans un système d'impression apte à mettre en œuvre une impression en 2 passages au moyen d'une pluralité d'appareils de formation d'image (102, 103) en coopération les uns avec les autres, le procédé comprenant :
une étape de gestion de performance courante consistant à gérer, en tant que performance courante de chaque utilisateur, un compte de feuilles utilisées lors de d'un traitement d'impression ;
une étape de gestion de limite haute consistant à mémoriser une valeur de limite haute d'un compte de feuilles pouvant être imprimées pour chaque utilisateur, où un traitement d'interruption d'impression peut être mis en œuvre sur la base d'une demande d'impression provenant d'un utilisateur dont la performance courante du compte de feuilles gérée à l'étape de gestion de performance courante dépasse la valeur de limite haute ;
une première étape de traitement consistant à, dans un premier appareil de formation d'image (102), exécuter un traitement d'impression de premier passage d'une impression en 2 passages et délivrer un matériau imprimé ; et
une seconde étape de traitement consistant à, dans un second appareil de formation d'image (103), exécuter un traitement d'impression de second passage de l'impression en 2 passages du matériau imprimé sur lequel a été exécuté le traitement d'impression de premier passage à la première étape de traitement,
dans lequel, même si la performance courante du compte de feuilles gérée à l'étape de gestion de performance courante pour l'utilisateur qui a désigné l'impression en 2 passages a atteint la valeur de limite haute lors du traitement d'impression de second passage de l'impression en 2 passages, le traitement d'interruption d'impression n'est pas mis en œuvre à l'étape de gestion de limite haute, et le traitement d'impression de second passage est mis en œuvre à la seconde étape de traitement.
